# EUROPEAN PATENT APPLICATION

(11) **EP 2 149 839 A2**
(43) Date of publication of application: **03.02.2010**
(21) Application number: 09166617.2
(22) Date of filing: 28.07.2009
(51) Int. Cl.: G06F 3/048

(54) **Information processing apparatus, method, and program**

(30) Priority: 31.07.2008 JP 2008197216
(71) Applicant: Sony Corporation, Minato-ku Tokyo 108-0075 (JP)
(72) Inventor: Ozawa, Hiroyuki, TOKYO 108-0075 (JP); Kashio, Hirokazu, TOKYO 108-0075 (JP); Akagawa, Satoshi, TOKYO 108-0075 (JP)
(74) Representative: Beder, Jens

(57) **Abstract**

An information processing apparatus includes: a touch screen means formed of a panel and a touch panel, the touch screen means receiving a tracing operation defined in such a way that a user touches a predetermined area of the touch screen means with a finger and then moves the finger from the predetermined area by a predetermined distance in a predetermined direction with the finger remaining touching the predetermined area, the positional relationship among a plurality of fingers at the time of the touch and the directions of the following fingers' movements defining N tracing operations (N is an integer greater than or equal to one), each of the N tracing operations related to a single function; and a setting means for setting a function related to a predetermined one of the N tracing operations when the predetermined tracing operation is performed.

## Description

### BACKGROUND OF THE INVENTION

### 1. FIELD OF THE INVENTION

The present invention relates to an information processing apparatus, method, and program, and particularly to an information processing apparatus, method, and program capable of using a simplified, intuitive imaging mode switching operation to switch an imaging mode to another among a large number of imaging modes.

### 2. DESCRIPTION OF THE RELATED ART

A digital camera (see JP-A-2007-019685) has a plurality of imaging-related functions. For example, a digital camera has a function of capturing an image using a predetermined imaging mode (hereinafter referred to as an imaging mode function). The imaging mode function is provided for each of a plurality of imaging modes. A user can set a desired one of the plurality of imaging mode functions. In other words, the operation described above can be taken as an imaging mode switching operation. The operation is therefore hereinafter referred to as the imaging mode switching operation.

A digital camera has been provided with a hardware-based dial (hereinafter referred to as a hardware dial). Each section of the hardware dial is related to the corresponding one of the imaging modes, a special menu for switching the imaging mode, or indication for displaying a setting screen for switching the imaging mode.

Alternatively, a digital camera is provided with dedicated hardware buttons instead of the hardware dial in some cases.

### SUMMARY OF THE INVENTION

The imaging mode switching operation using the hardware dial or buttons described above is, however, a complicated, cumbersome operation for the user, and hardly an intuitive operation.

For example, when the imaging mode switching operation for switching the imaging mode is carried out by rotating the hardware dial, icons indicative of corresponding imaging modes are printed on the dial. The user, however, needs to memorize in advance which icon represents which imaging mode. Considering the increase in the number of imaging modes as the number of functions has increased in recent years, it is not easy for the user to memorize all the icons (all the imaging modes). The user therefore needs to carry out a complicated, cumbersome operation, such as checking a manual, at least before the user memorizes the icons. Having to memorize the icons is not an intuitive operation in the first place.

In this case, for example, displaying a message indicative of the current imaging mode on a liquid crystal panel in response to the rotation of the hardware dial helps the user who is carrying out the imaging mode switching operation to some extent. It is, however, also necessary to carry out a complicated, cumbersome, operation of rotating the hardware dial multiple times until a desired imaging mode is reached and viewing the message on the liquid crystal panel whenever the hardware dial is rotated.

Further, when a special menu for switching the imaging mode is displayed or indication for displaying a setting screen for switching the imaging mode is made, the user needs to carry out in the following procedure a complicated, cumbersome operation, for example, of selecting a desired imaging mode from the menu or the setting screen.

Carrying out the imaging mode switching operation of related art, that is, the complicated, cumbersome, non-intuitive imaging mode switching operation described above may cause the user to miss imaging opportunities, which are important in the camera operation.

Further, the size of the hardware dial is limited and the number of icons printable thereon is limited accordingly in the first place. As a result, the number of settable imaging modes is limited.

Thus, it is desirable to use a simplified, intuitive imaging mode switching operation to switch an imaging mode to another among a large number of imaging modes.

An information processing apparatus according to an embodiment of the invention includes a touch screen means formed of a liquid crystal panel and a touch panel, the touch screen means receiving a tracing operation defined in such a way that a user touches a predetermined area of the touch screen means with a finger and then moves the finger from the predetermined area by a predetermined distance in a predetermined direction with the finger remaining touching the predetermined area, the positional relationship among a plurality of fingers at the time of the touch and the directions of the following fingers' movements defining N tracing operations (N is an integer greater than or equal to one), each of the N tracing operations related to a single function; and a setting means for setting a function related to a predetermined one of the N tracing operations when the predetermined tracing operation is performed.

The information processing apparatus may further include a display control means for displaying a guide display on the touch screen means, when the touch screen means detects that the one or more fingers have touched the touch screen means before the tracing operation, the guide display guiding how to perform a possible one of the N tracing operations based on the detected positional relationship among the one or more fingers.

The setting means may adjust and set the effect of the function in a stepwise manner in accordance with the distance over which the fingers have moved in the tracing operation.

An information processing method and program according to another embodiment of the invention are a method and program corresponding to the information processing apparatus according to the embodiment of the invention described above.

In the information processing method and program according to the another embodiment of the invention, an information processing apparatus including a touch screen means formed of a liquid crystal panel and a touch panel is used. A tracing operation is defined in such a way that a user touches a predetermined area of the touch screen means with a finger and then moves the finger from the predetermined area by a predetermined distance in a predetermined direction with the finger remaining touching the predetermined area. The positional relationship among a plurality of fingers at the time of the touch and the directions of the following fingers' movements define N tracing operations (N is an integer greater than or equal to one), and each of the N tracing operations is related to a single function. When a predetermined one of the N tracing operations is performed, a function related to the predetermined tracing operation is set.

As described above, according to the embodiments of the invention, an imaging mode switching operation is achieved by employing an imaging mode switching function of relating an imaging mode to a tracing operation. In particular, a simplified, intuitive imaging mode switching operation can switch an imaging mode to another among a large number of imaging modes.

### BRIEF DESCRIPTION OF THE DRAWINGS

Fig. 1 is a block diagram showing an exemplary configuration of an imaging apparatus as an embodiment of an information processing apparatus to which the invention is applied;
Figs. 2A and 2B are perspective views showing an exemplary exterior configuration of the imaging apparatus shown in Fig. 1;
Fig. 3 describes an exemplary imaging mode switching operation performed on the imaging apparatus;
Fig. 4 describes another exemplary imaging mode switching operation performed on the imaging apparatus;
Fig. 5 is a flowchart describing exemplary imaging mode switching processes, which is part of the processes carried out by the imaging apparatus shown in Fig. 1; and
Fig. 6 is a block diagram showing an exemplary configuration of an information processing apparatus to which the invention is applied, which is different from the configuration shown in Fig. 1.

### DESCRIPTION OF THE PREFERRED EMBODIMENTS

An embodiment of the invention will be described below with reference to the drawings.

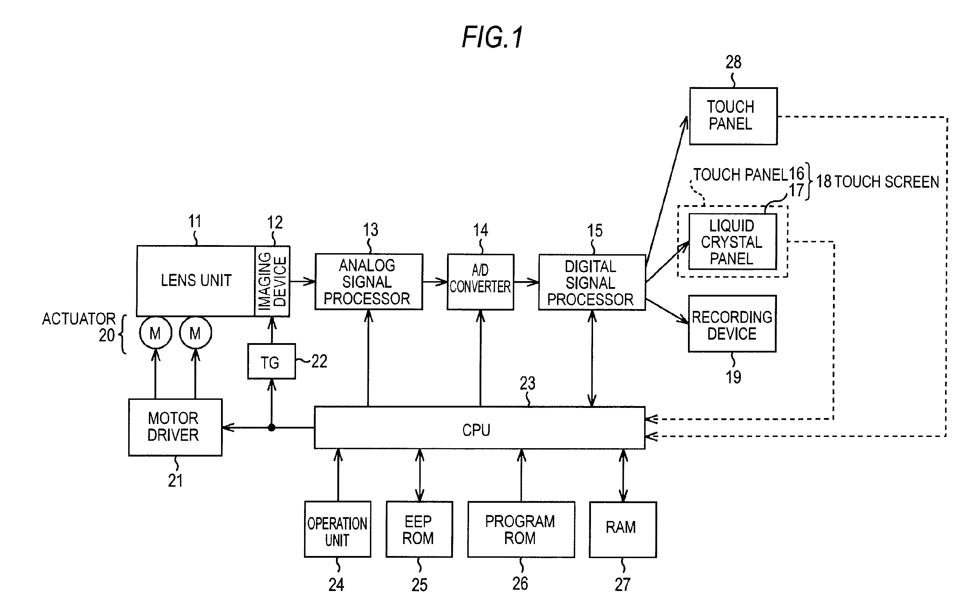

Fig. 1 is a block diagram showing an exemplary configuration of an imaging apparatus as an embodiment of an information processing apparatus to which the invention is applied.

In the example shown in Fig. 1, the imaging apparatus includes a lens unit 11 through a touch panel 28.

The lens unit 11 includes an imaging lens, a diaphragm, and a focus lens. An imaging device 12, such as a CCD (Charge Coupled Device), is disposed on the optical path along which subject light incident through the lens unit 11 travels.

The imaging device 12, an analog signal processor 13, an A/D (Analog/Digital) converter 14, and a digital signal processor 15 are connected to each other in this order.

The digital signal processor 15 is connected to a liquid crystal panel 17, a recording device 19, and a touch panel 28.

The lens unit 11 is connected to an actuator 20 for adjusting the diaphragm, which is part of the lens unit 11, and moving the focus lens, which is part of the lens unit 11. The actuator 20 is also connected to a motor driver 21. The motor driver 21 drives and controls the actuator 20.

A CPU (Central Processing Unit) 23 controls the entire imaging apparatus. To this end, the CPU 23 is connected to the analog signal processor 13, the A/D converter 14, the digital signal processor 15, the motor driver 21, a TG (Timing Generator) 22, an operation unit 24, an EEPROM (Electrically Erasable Programmable ROM) 25, a program ROM (Read Only Memory) 26, a RAM (Random Access Memory) 27, a touch panel 16, and the touch panel 28.

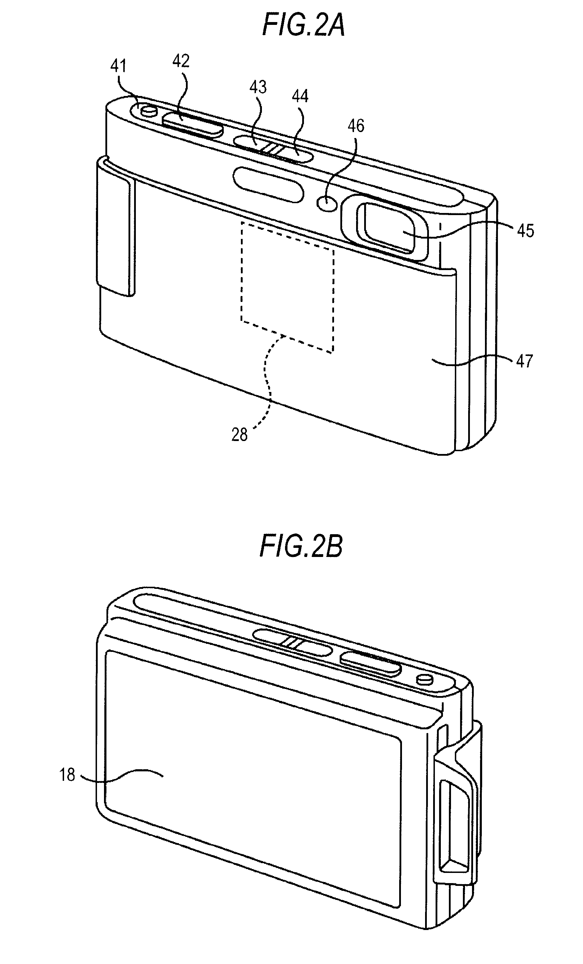

A touch screen 18 includes the touch panel 16 and the liquid crystal panel 17. The touch panel 28 is disposed on the opposite side of the imaging apparatus to the touch screen 18, that is, on the imaging lens side (see Figs. 2A and 2B, which will be described later).

The recording device 19 is formed of, for example, a DVD (Digital Versatile Disc) or any other similar optical disc, a memory card or any other similar semiconductor memory, or any other similar removable recording medium. The recording device 19 can be freely attached and detached to and from a body of the imaging apparatus.

The EEPROM 25 stores a variety of types of information that has been set. The EEPROM 25 further stores other information, for example, information that should be held when the power is turned off.

The program ROM 26 stores programs to be executed by the CPU 23 and data necessary for the CPU 23 to execute the programs.

The RAM 27 serves as a work area used when the CPU 23 carries out a variety of processes, and temporarily stores necessary programs and data.

The actions of the entire imaging apparatus having the configuration shown in Fig.1 will be described below in summary.

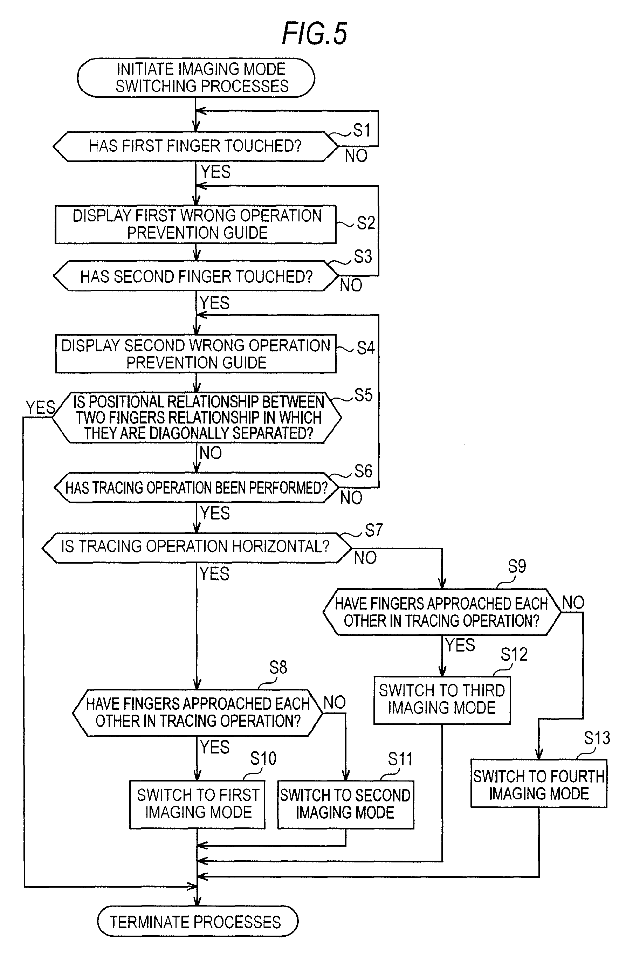

The CPU 23 controls the components that form the imaging apparatus by executing the programs recorded in the program ROM 26. The CPU 23 carries out predetermined processes in response to signals from the touch panel 16 or the touch panel 28 and signals from the operation unit 24. Specific examples of the processes will be described later with reference to the flowchart shown in Fig. 5.

A user operates the operation unit 24, which in turn provides the CPU 23 with a signal corresponding to the operation.

That is, the touch screen 18 or the touch panel 28, when touched, for example, by a finger at an arbitrary position, that is, when the user carries out a predetermined input operation, detects the coordinates of the touched position. An electric signal representing the detected coordinates (hereinafter referred to as a coordinate signal) is sent to the CPU 23. The CPU 23 derives the coordinates of the touched position from the coordinate signal, acquires predetermined information related to the coordinates, and carries out a predetermined process based on the information.

The touch used herein includes not only static touch (touching only a single predetermined area) but also dynamic touch (touch that occurs when a finger or any other object follows a predetermined path). For example, flipping a sheet on an image or any other similar tracing operation performed by a finger is one form of touch.

The actuator 20 is driven to pull the lens unit 11 out of a housing of the imaging apparatus and push the lens unit 11 into the housing. Further, the actuator 20 is driven to adjust the diaphragm, which is part of the lens unit 11, and move the focus lens, which is part of the lens unit 11.

The TG 22 provides the imaging device 12 with a timing signal under the control of the CPU 23. The timing signal controls the exposure period and other parameters in the imaging device 12.

The imaging device 12 operates based on the timing signal provided from the TG 22 and receives subject light incident through the lens unit 11, and the subject light then undergoes photoelectric conversion. The imaging device 12 then provides the analog signal processor 13 with an analog image signal according to the amount of received light. In this process, the motor driver 21 drives the actuator 20 under the control of the CPU 23.

The analog signal processor 13 carries out amplification and other analog signal processing on the analog image signal provided from the imaging device 12 under the control of the CPU 23. The analog signal processor 13 provides the A/D converter 14 with the resultant analog image signal.

The A/D converter 14 converts the analog image signal from the analog signal processor 13 into a digital image signal under the control of the CPU 23. The A/D converter 14 provides the digital signal processor 15 with the resultant digital image signal.

The digital signal processor 15 carries out noise removal and other digital signal processing on the digital image signal provided from the A/D converter 14 under the control of the CPU 23. The digital signal processor 15 displays an image corresponding to the digital image signal on the liquid crystal panel 17.

Further, the digital signal processor 15 compresses and encodes the digital image signal provided from the A/D converter 14 in accordance with a predetermined compression and encoding scheme, for example, JPEG (Joint Photographic Experts Group). The digital signal processor 15 records the compressed and encoded digital image signal in the recording device 19.

The digital signal processor 15 also reads the compressed and encoded digital image signal from the recording device 19 and decompresses and decodes the signal in accordance with a decompression and decoding scheme corresponding to the predetermined compression and encoding scheme. The digital signal processor 15 displays an image corresponding to the digital image signal on the liquid crystal panel 17.

Additionally, the digital signal processor 15 produces a frame image used to perform an AF (auto focus) function (hereinafter referred to as an AF frame) on the liquid crystal panel 17 under the control of the CPU 23.

That is, an image captured by the imaging device 12 is displayed on the liquid crystal panel 17. In this case, the AF frame is set on the image displayed on the liquid crystal panel 17. The focus control is carried out based on the image within the AF frame.

As described above, the imaging apparatus has the AF function. The AF function includes not only the focus control function but also the function of setting the AF frame in an arbitrary position on the image displayed on the liquid crystal panel 17. The AF function further includes a function of controlling the position, the size, and other parameters of the AF frame only by operating the touch screen 18 formed of the liquid crystal panel 17 and the touch panel 16.

To perform the AF function, the CPU 23 reads a program in the program ROM 26 and executes the program. The imaging apparatus further has an AE (Automatic Exposure) function and an AWB (Auto White Balance) function. These functions are also performed by instructing the CPU 23 to read programs in the program ROM 26 and execute them.

More specifically, the AF function, the AE function, and the AWB function are presented only by way of example of the functions provided in the imaging apparatus. That is, the imaging apparatus has a variety of imaging-related functions. In the following description, among the variety of functions, imaging-related basic functions are referred to as basic functions, and imaging-related application functions are referred to as application functions. The basic functions include not only the AF function, the AE function, and the AWB function but also an "imaging mode selection function" and an "imaging timer setting function." The application functions include a "pixel number changing function" and a "color adjusting function."

The imaging apparatus has a plurality of imaging mode functions as part of the basic functions.

Figs. 2A and 2B are perspective views showing an exemplary exterior configuration of the imaging apparatus in the example shown in Fig. 1.

In the following description, among the surfaces of the imaging apparatus, the surface facing a subject to be imaged by the user, that is, the surface on which the lens unit 11 is disposed, is referred to as a front surface. On the other hand, among the surfaces of the imaging apparatus, the surface facing the user who images the subject, that is, the surface opposite the front surface, is referred to as a rear surface. Among the surfaces of the imaging apparatus, the surface disposed on the upper side and the surface disposed on the lower side when the user images the subject are referred to as an upper surface and a lower surface, respectively.

Fig. 2A is a perspective view showing an exemplary exterior configuration of the front surface of the imaging apparatus, and Fig. 2B is a perspective view showing an exemplary exterior configuration of the rear surface of the imaging apparatus.

The front surface of the imaging apparatus can be covered with a lens cover 47. Fig. 2A shows the state after the lens cover 47 on the front surface is slid downward and opened. As shown in Fig. 2A, an imaging lens 45 incorporated in the lens unit 11 and an AF illuminator 46 are disposed in this order in the right-to-left direction in an upper front portion from which the lens cover 47 is removed. The touch panel 28 is disposed in a lower front portion covered with the lens cover 47. Specifically, the portion where the touch panel 28 is disposed is a central portion of the imaging apparatus or the vicinity thereof where the user does not hold the imaging apparatus when the user images a subject.

The AF illuminator 46 also serves as a self-timer lamp. On the upper surface of the imaging apparatus are disposed a zoom lever (TELE/WIDE) 41, a shutter button 42, a playback button 43, and a power button 44 in this order from the left-to-right direction in Fig. 2A. The zoom lever 41, the shutter button 42, the playback button 43, and the power button 44 are part of the operation unit 24 shown in Fig. 1.

As shown in Fig. 2B, the touch screen 18 is disposed over the rear surface of the imaging apparatus.

Since the touch screen 18 is thus disposed on the rear surface of the imaging apparatus, the user, when imaging a subject, can operate a GUI (Graphical User Interface) using the touch screen 18 with the front surface of the imaging apparatus remaining facing the subject.

In the present embodiment, for example, the imaging mode switching operation described above can be carried out as a GUI operation using the touch screen 18.

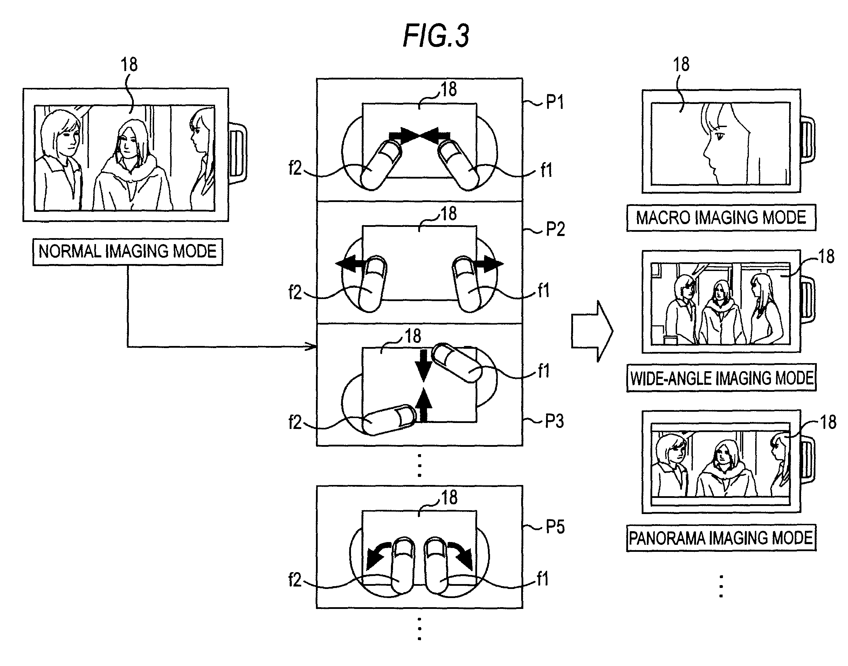

An example of the imaging mode switching operation to which the invention is applied will be described below with reference to Fig. 3.

In the following description, a default predetermined imaging mode is referred to as a normal imaging mode, and a captured image captured in the normal imaging mode is referred to as a reference image.

It is assumed that the CPU 23 can recognize that a plurality of fingers have touched (tapped) the touch screen 18 all at once. It is also assumed that the CPU 23 can recognize that a plurality of fingers have dragged over the touch screen 18 and which directions the individual fingers have dragged.

A tracing operation is employed as a basic imaging mode switching operation. The tracing operation is defined as an operation in which the user touches (taps) a predetermined area of the touch screen 18 with a finger and then moves the finger from the predetermined area by a predetermined distance in a predetermined direction with the finger remaining touching the touch screen 18 (drags).

It is assumed that the positional relationship of the plurality of fingers at the time of the touch and the directions of the following fingers' movements define N tracing operations (N is an integer greater than or equal to one) and each of the N tracing operations is related to a single imaging mode.

For example, in the example shown in Fig. 3, it is assumed that the positional relationship of two fingers f1 and f2 at the time of the touch and the directions of the following fingers' movements define N tracing operations (Fig. 3 shows only four tracing operations) and the N tracing operations are related to first to N-th imaging modes, respectively.

Specifically, in the example shown in Fig. 3, for example, "the positional relationship of the two fingers f1 and f2 at the time of the touch" includes the positional relationship in which the two fingers f1 and f2 are disposed horizontally (hereinafter simply expressed as a horizontal direction) and the positional relationship in which the two fingers f1 and f2 are disposed vertically (hereinafter simply expressed as a vertical direction). The horizontal direction used herein is not the horizontal direction in the exact sense, but a direction having a certain likelihood (a certain range) with respect to the horizontal direction in the exact sense. Similarly, the vertical direction used herein is not the vertical direction in the exact sense, but a direction having a certain likelihood (a certain range) with respect to the vertical direction in the exact sense.

Further, in the example shown in Fig. 3, for example, "the directions of the following fingers' movements" include the direction in which the two fingers f1 and f2 approach each other and the direction in which the two fingers f1 and f2 move away from each other.

That is, a tracing operation P1 is defined as a movement in the horizontal direction on the touch screen 18 in which the two fingers f1 and f2 approach each other, and the tracing operation P1 is related to a first imaging mode. In this case, the first imaging mode is not limited to a specific one, but it is preferable that the tracing operation P1 intuitively leads to the first imaging mode. For example, the first imaging mode is preferably a mode for capturing an enlarged reference image (hereinafter referred to as a macro imaging mode).

A tracing operation P2 is defined as a movement in the horizontal direction on the touch screen 18 in which the two fingers f1 and f2 move away from each other, and the tracing operation P2 is related to a second imaging mode. In this case, the second imaging mode is not limited to a specific one, but it is preferable that the tracing operation P2 intuitively leads to the second imaging mode. For example, the second imaging mode is preferably an imaging mode using an imaging range larger than that of the reference image (hereinafter referred to as a wide-angle imaging mode).

A tracing operation P3 is defined as a movement in the vertical direction on the touch screen 18 in which the two fingers f1 and f2 approach each other, and the tracing operation P3 is related to a third imaging mode. In this case, the third imaging mode is not limited to a specific one, but it is preferable that the tracing operation P3 intuitively leads to the third imaging mode. For example, when the size of the reference image is called a full size, an imaging mode for capturing an image in what is called a panorama size is referred to as a panorama mode.

Although not illustrated in Fig. 3, a tracing operation P4 is defined as a movement in the vertical direction on the touch screen 18 in which the two fingers f1 and f2 move away from each other, and the tracing operation P4 is related to a fourth imaging mode. In this case, the fourth imaging mode is not limited to a specific one, but it is preferable that the tracing operation P4 intuitively leads to the fourth imaging mode.

A tracing operation P5 is defined as a movement in the circumferential direction from horizontal to vertical on the touch screen 18 in which the two fingers f1 and f2 move away from each other, and the tracing operation P5 is related to a fifth imaging mode. In this case, the fifth imaging mode is not limited to a specific one, but it is preferable that the tracing operation P5 intuitively lead to the fifth imaging mode.

Further, in the imaging mode switching operation to which the invention is applied, a guide for preventing a wrong operation is displayed at the time when the user's finger f1 touches the touch screen 18, and another guide for preventing a wrong operation is displayed at the time when a plurality of fingers (the two fingers f1 and f2 in the present example) touch the touch screen 18.

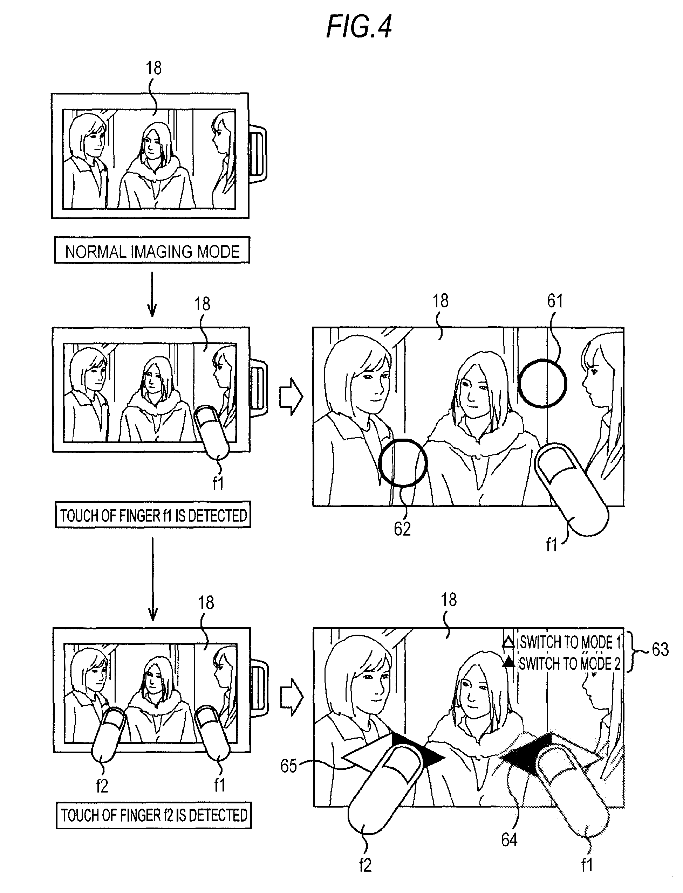

For example, as shown in Fig. 4, when the finger f1 touches the touch screen 18, symbols 61 and 62 for guiding the second finger f2 to a place the second finger f2 should touch are displayed. The symbols 61, 62 and other guide symbols displayed when the user's finger f1 touches the touch screen 18 are hereinafter referred to as first wrong operation prevention guides.

Further, for example, as shown in Fig 4, when the two fingers f1 and f2 touch the touch screen 18, symbols 64 and 65 indicating how the two fingers f1 and f2 should perform tracing operations and information 63 on the imaging modes related to the tracing operations are displayed. While the symbols 64, 65 and the imaging mode information 63 are displayed in black and white in the example shown in Fig. 4, they may be displayed in color. For example, one of the symbols 64 and 65, the triangular mark indicative of the direction in which the fingers f1 and f2 move away from each other, can be displayed in blue, whereas the other one of the symbols 64 and 65, the triangular mark indicative of the direction in which the fingers f1 and f2 approach each other, can be displayed in red. In this case, the imaging mode information 63 can also be colored in accordance with the colored symbols 64 and 65. In this way, the user can readily understand how the fingers f1 and f2 that have touched the touch screen 18 can be moved and which movement of the fingers f1 and f2 switches the imaging mode to which imaging mode. A user's wrong operation is thus prevented.

The symbols 64 and 65, the information 63, and other guide symbols displayed when the user's two fingers f1 and f2 touch the touch screen 18 are hereinafter referred to as second wrong operation prevention guides.

Further, the CPU 23 can adjust in a stepwise manner the effect of the selected imaging mode in accordance with the distance over which the fingers have moved in a tracing operation.

For example, when the tracing operation P1, in which the two fingers f1 and f2 approach each other in the horizontal direction, is performed on the touch screen 18, the CPU 23 switches the imaging mode to the macro imaging mode as the first imaging mode as described above. In this case, the CPU 23 can also adjust in a stepwise manner the effect of the macro imaging mode, that is, the enlargement rate, in accordance with the distance over which the two fingers f1 and f2 have moved in the direction in which they approach each other.

The processes carried out by the imaging apparatus shown in Fig. 1 (hereinafter referred to as imaging mode switching processes) to perform the exemplary operation described in Figs. 3 and 4, that is, the imaging mode switching operation of the present embodiment, will next be described with reference to the flowchart shown in Fig. 5.

Among the states of the imaging apparatus actions, the state in which a captured image is reproduced on the touch screen 18, that is, the state in which the user can view a captured image, is referred to as a captured image reproduced state. It is assumed that the imaging mode switching processes are initiated when the state of the imaging apparatus action transits to the captured image reproduced state. Further, the imaging mode switching processes are forcibly terminated not only when the processes described in the flowchart are normally completed, but also when the state of the imaging apparatus action transits from the captured image reproduced state to another state.

In the example shown in Fig. 5, only the four types of tracing operations P1 to P4 are employed to simplify the description.

In the step S1, the CPU 23 judges whether or not the finger f1, which is a first finger, has touched the touch screen 18.

When no area of the touch screen 18 has been touched, the judgment in the step S1 is NO and the control returns to the process in the step S1. That is, the judgment process in the step S1 is repeated until any area of the touch screen 18 is touched.

Thereafter, when the finger f1 touches any area of the touch screen 18, the touch panel 16, which forms the touch screen 18, inputs a coordinate signal to the CPU 23. When the coordinate signal is inputted to the CPU 23, the CPU 23 therefore judges that the result of the process in the step S1 is YES and advances the control to the process in the step S2.

In the step S2, the CPU 23 controls the digital signal processor 15 to display a first wrong operation prevention guide.

In the step S3, the CPU 23 judges whether or not the finger f2, which is a second finger, has touched the touch screen 18.

When two areas of the touch screen 18 have not been touched, the judgment in the step S3 is NO and the control returns to the process in the step S2. That is, the loop process including the step S2 and NO in the step S3 is repeated until two areas of the touch screen 18 are touched.

Thereafter, when the finger f2 touches the touch screen 18 with the finger f1 touching the touch screen 18, the touch panel 16, which forms the touch screen 18, inputs not only the coordinate signal for the finger f1 but also a coordinate signal for the finger f2 to the CPU 23. When the two coordinate signals are inputted to the CPU 23, the CPU 23 therefore judges that the result of the process in the step S3 is YES and advances the control to the process in the step S4.

In the step S4, the CPU 23 controls the digital signal processor 15 to display a second wrong operation prevention guide.

In the step S5, the CPU 23 judges whether or not the positional relationship between the two fingers f1 and f2 is a relationship in which the fingers are diagonally separated.

When the positional relationship between the two fingers f1 and f2 is a relationship in which the fingers are diagonally separated, it is judged that the two fingers f1 and f2 will not perform a tracing operation. The judgment in the step S5 is therefore NO, and the imaging mode switching processes are terminated.

On the other hand, when the positional relationship between the two fingers f1 and f2 is not a relationship in which the fingers are diagonally separated, it is judged that the two fingers f1 and f2 may perform a tracing operation. The judgment in the step S5 is therefore YES, and the control proceeds to the process in the step S6.

In the step S6, the CPU 23 judges whether or not a tracing operation has been performed.

Judging whether or not a tracing operation is being performed can be made by using the CPU 23 to monitor the coordinate signals from the touch panel 16, which forms the touch screen 18. That is, the CPU 23 can recognize the path of the finger f1 by using the time-series coordinate signals. The CPU 23 then detects whether or not a tracing operation is being performed based on the recognition result.

Therefore, when the CPU 23 detects no tracing operation from the result of the recognition of the path of the finger f1, the judgment in the step S6 is NO and the control returns to the process in the step S4. The process in the step S4 and the following processes are then repeated.

On the other hand, when the CPU 23 detects a tracing operation from the result of the recognition of the path of the finger f1, the judgment in the step S6 is YES and the control proceeds to the process in the step S7.

In the step S7, the CPU 23 judges whether or not the tracing operation is horizontal.

When the tracing operation is horizontal, the judgment in the step S7 is YES and the control proceeds to the process in the step S8.

In the step S8, the CPU 23 judges whether or not the fingers have approached each other in the tracing operation.

When the fingers have approached each other in the tracing operation, the judgment in the step S8 is YES and the control proceeds to the process in the step S10.

In this case, the tracing operation P1 shown in Fig. 3, that is, the tracing operation P1 in which the two fingers f1 and f2 approach each other in the horizontal direction, has been performed. The tracing operation P1 is related to the first imaging mode. In the step S10, the CPU 23 therefore switches the imaging mode to the first imaging mode (the macro imaging mode, for example). The imaging mode switching processes are completed at this point.

On the other hand, when the tracing operation P2 shown in Fig. 3, that is, the tracing operation P2 in which the two fingers f1 and f2 move away from each other in the horizontal direction, has been performed, the judgment in the step S8 is NO and the control proceeds to the process in the step S11. Since the tracing operation P2 is related to the second imaging mode, the CPU 23 switches the imaging mode to the second imaging mode (the wide-angle imaging mode, for example) in the step S11. The imaging mode switching processes are completed at this point.

When the vertical tracing operation P3 or P4 has been performed, the judgment in the step S7 is NO and the control proceeds to the process in the step S9.

In the step S9, the CPU 23 judges whether or not the fingers have approached each other in the tracing operation.

When the fingers have approached each other in the tracing operation, the judgment in the step S9 is YES and the control proceeds to the process in the step S12.

In this case, the tracing operation P3 shown in Fig. 3, that is, the tracing operation P3 in which the two fingers f1 and f2 approach each other in the vertical direction, has been performed. The tracing operation P3 is related to the third imaging mode. In the step S12, the CPU 23 therefore switches the imaging mode to the third imaging mode (the panorama imaging mode, for example). The imaging mode switching processes are completed at this point.

On the other hand, when the tracing operation P4 in which the two fingers f1 and f2 move away from each other in the vertical direction has been performed, the judgment in the step S9 is NO and the control proceeds to the process in the step S13. Since the tracing operation P4 is related to the fourth imaging mode, the CPU 23 switches the imaging mode to the fourth imaging mode in the step S13. The imaging mode switching processes are completed at this point.

Using the information processing apparatus (the imaging apparatus shown in Fig. 1, for example) capable of carrying out the imaging mode switching processes to which the invention is applied eliminates the need for the hardware dial or dedicated buttons of related art. It is therefore possible to readily switch an imaging mode to another among a large number of imaging modes. Further, a simplified, intuitive operation, such as the imaging mode switching operation described with reference to Figs. 3, 4, and other figures, can be achieved. As a result, it is anticipated that the user's chance of missing imaging opportunities, which are important in the camera operation, will be drastically reduced as compared to that in related art.

The series of processes described above may be carried out by hardware or software.

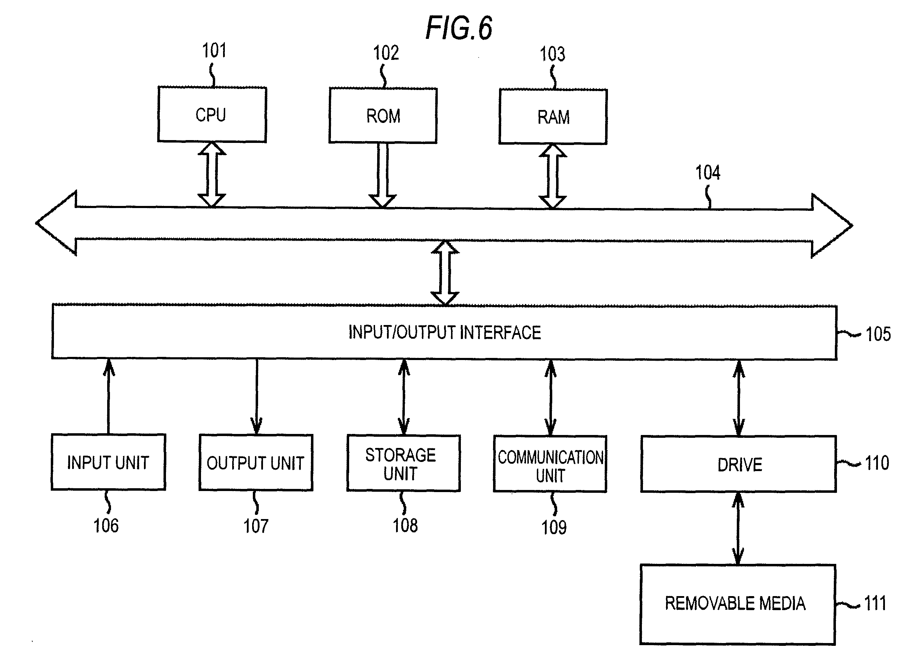

In this case, the series of processes described above may of course be carried out by the imaging apparatus shown in Fig. 1, or may be carried out, for example, by a personal computer shown in Fig. 6.

In Fig. 6, a CPU 101 carries out a variety of processes in accordance with programs recorded in a ROM (Read Only Memory) 102 or programs loaded from a storage unit 108 to a RAM (Random Access Memory) 103. Further, the RAM 103 as appropriate stores data necessary for the CPU 101 to carry out the variety of processes.

The CPU 101, the ROM 102, and the RAM 103 are connected to one another via a bus 104. An input/output interface 105 is also connected to the bus 104.

The input/output interface 105 is connected to an input unit 106 formed of a keyboard, a mouse, and other components, an output unit 107, the storage unit 108 formed of a hard disc drive and other components, and a communication unit 109 formed of a modem, a terminal adapter, and other components. The communication unit 109 controls communication with other apparatus (not shown) via a network including the Internet.

The input/output interface 105 is also connected to a drive 110 as necessary, into which a removable medium 111, such as a magnetic disk, an optical disk, a magneto-optical disc, and a semiconductor memory, is loaded as appropriate. Computer programs read from any of the above media are installed in the storage unit 108 as necessary.

When the series of processes are carried out by software, programs that form the software are installed via the network or by any of the recording media, for example, to a computer incorporated in dedicated hardware or a general-purpose personal computer that can perform a variety of functions by installing a variety of programs.

As shown in Fig. 1 or 6, recording media containing such programs are formed of not only the removable medium (packaged medium) 111 (Fig. 6) distributed to users to provide the programs separately from the apparatus body, such as a magnetic disk (including a floppy disk), an optical disk (including a CD-ROM (Compact Disk-Read Only Memory) and a DVD (Digital Versatile Disk)), a magneto-optical disk (including an MD (Mini-Disk)), and a semiconductor memory, on which the programs are recorded, but also the program ROM 26 shown in Fig. 1, the ROM 102, a hard disk contained in the storage unit 108 shown in Fig. 6, and other components, which are incorporated in advance in the apparatus body and provided to the users and on which the programs are recorded.

In the present specification, the steps describing the programs recorded in any of the storage media include not only processes that are sequentially carried out in a time-series manner but also processes that are not necessarily carried out in a time-series manner but are carried out concurrently or individually.

The invention is also applicable to setting functions other than the imaging mode functions. That is, a predetermined number of tracing operations may be related to any other function instead of the imaging mode function. Conversely, other operations based on a plurality of touching actions on the touch panel other than tracing operations can be assigned to functions including the imaging mode functions. That is, the invention is applicable to a variety of operations as well as tracing operations.

The above description has been made with reference to the case where a display device in which the display operation is controlled by the information processing apparatus to which the invention is applied is a liquid crystal display device, specifically, the liquid crystal display panel 17. The invention is also applicable to not only a liquid crystal display panel but also a display device in which the display operation is instructed on a frame or field basis (frames or fields form video images and each of the frames or fields is hereinafter referred to as a displaying unit); a plurality of pixels that form a single displaying unit are formed of display elements; and at least part of the display elements can remain in a display state. The display elements described above are hereinafter referred to as hold-type display elements, and a display device having a screen formed of hold-type display elements is referred to as a hold-type display device. That is, a liquid crystal display device has been presented only by way of example of a hold-type display device, and the invention is applicable to any hold-type display device.

The invention is further applicable to not only a hold-type display device but also, for example, a flat-panel, self-luminous display device using organic EL (Electro Luminescent) devices as light-emitting elements. That is, the invention is applicable to any display device including display elements that display a plurality of pixels that form an image. The display device described above is referred to as a pixel-type display device. In a pixel-type display device, a single pixel is not, in particular, necessarily related to a single display element.

In other words, a display device in which the display operation is controlled by the information processing apparatus to which the invention is applied only needs to be a display device capable of carrying out the series of processes described above.

The present application contains subject matter related to that disclosed in Japanese Priority Patent Application JP 2008-197216 filed in the Japan Patent Office on July 31, 2008, the entire contents of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus comprising:
a touch screen means formed of a panel and a touch panel,
the touch screen means receiving a tracing operation defined in such a way that a user touches a predetermined area of the touch screen means with a finger and then moves the finger from the predetermined area by a predetermined distance in a predetermined direction with the finger remaining touching the predetermined area, the positional relationship among a plurality of fingers at the time of the touch and the directions of the following fingers' movements defining N tracing operations (N is an integer greater than or equal to one), each of the N tracing operations related to a single function; and
a setting means for setting a function related to a predetermined one of the N tracing operations when the predetermined tracing operation is performed.

2. The information processing apparatus according to claim 1,
further comprising a display control means for displaying a guide display on the touch screen means, when the touch screen means detects that the one or more fingers have touched the touch screen means before the tracing operation, the guide display guiding how to perform a possible one of the N tracing operations based on the detected positional relationship among the one or more fingers.

3. The information processing apparatus according to claim 1 or 2,
wherein the setting means adjusts and sets the effect of the function in a stepwise manner in accordance with the distance over which the fingers have moved in the tracing operation.

4. An information processing method used with an information processing apparatus including a touch screen means formed of a panel and a touch panel,
the touch screen means receiving a tracing operation defined in such a way that a user touches a predetermined area of the touch screen means with a finger and then moves the finger from the predetermined area by a predetermined distance in a predetermined direction with the finger remaining touching the predetermined area,
the positional relationship among a plurality of fingers at the time of the touch and the directions of the following fingers' movements defining N tracing operations (N is an integer greater than or equal to one), each of the N tracing operations related to a single function,
the method comprising the step of:
setting a function related to the predetermined tracing operation, when a predetermined one of the N tracing operations is performed.

5. A program causing a computer controlling an information processing apparatus including a touch screen means formed of a panel and a touch panel to carry out a control process,
the touch screen means receiving a tracing operation defined in such a way that a user touches a predetermined area of the touch screen means with a finger and then moves the finger from the predetermined area by a predetermined distance in a predetermined direction with the finger remaining touching the predetermined area,
the positional relationship among a plurality of fingers at the time of the touch and the directions of the following fingers' movements defining N tracing operations (N is an integer greater than or equal to one), each of the N tracing operations related to a single function,
the control process including the step of:
setting a function related to the predetermined tracing operation, when a predetermined one of the N tracing operations is performed.

6. An information processing apparatus comprising:
a touch screen unit formed of a panel and a touch panel,
the touch screen unit receiving a tracing operation defined in such a way that a user touches a predetermined area of the touch screen unit with a finger and then moves the finger from the predetermined area by a predetermined distance in a predetermined direction with the finger remaining touching the predetermined area, the positional relationship among a plurality of fingers at the time of the touch and the directions of the following fingers' movements defining N tracing operations (N is an integer greater than or equal to one), each of the N tracing operations related to a single function; and
a setting unit configured to set a function related to a predetermined one of the N tracing operations when the predetermined tracing operation is performed.
